Europäisches Patentamt

European Patent Office

Office européen des brevets

(11) Publication number: **0 189 482**
A1

# EUROPEAN PATENT APPLICATION
published in accordance with Art. 158(3) EPC

(21) Application number: 85902657.7

(22) Date of filing: 30.05.85

Data of the international application taken as a basis:

(86) International application number:
PCT/JP85/00301

(87) International publication number:
WO85/05674 (19.12.85 85/27)

(51) Int. Cl.⁴: **G 01 B 11/24**
G 01 B 11/30, G 01 B 9/02

(30) Priority: 31.05.84 JP 111136/84

(43) Date of publication of application:
06.08.86 Bulletin 86/32

(84) Designated Contracting States:
DE GB

(71) Applicant: Matsushita Electric Industrial Co., Ltd.
1006, Oaza Kadoma
Kadoma-shi Osaka-fu, 571(JP)

(72) Inventor: NAKAJO, Masahiro
6-3, Ogura-cho
Hirakata-shi Osaka-fu 573(JP)

(72) Inventor: UEDA, Shuji
728-2, Oaza Neya
Neyagawa-shi Osaka-fu 572(JP)

(72) Inventor: NAKATA, Kunio
B-1208, 31, Yamadanishi 1-chome
Suita-shi Osaka-fu 565(JP)

(74) Representative: Patentanwälte Kirschner & Grosse
Herzog-Wilhelm-Strasse 17
D-8000 München 2(DE)

(54) SHAPE EVALUATING APPARATUS.

(57) A shape evaluating apparatus for accurately evaluating the shape of an aspherical lens in a noncontacting manner utilizing the interference of light. The reflected light from an object (26) is reflected on the reflecting surfaces of a beam splitter (27) and a reflector (28), which are disposed in opposition to each other, to generate two laterally-shifted optical beams. According to the above-described arrangement, the two laterally-shifted optical beams passed through the common optical path, so that the optical beams can be kept stable with respect to the variations of the environment. Since the construction of the apparatus is simplified, the set-up cost can be advantageously reduced.

FIG. 2

TITLE OF THE INVENTION

### SHAPE MEASURING APPARATUS

## TECHNICAL FIELD

The present invention relates to a shape measuring apparatus for precisely measuring plane surface, spherical surface or aspherical surface of lens, mirror and the like.

## BACKGROUND ART

Presently, aspherical lenses are used, for the purpose of being light and low cost, in lenses of precise optical apparatus such as video tape recorder, digital audio disk or the like and camera.

Measuring of the shape of aspherical surface of such aspherical lens is generally practiced by the tracer method which is represented by a three dimensions measuring apparatus, the tracer method has a defect of taking time for measuring because of point measurement. Accordingly in recent years, an interference measuring method becomes to be used, which measures the shape of whole aspherical surface without contacting and with high precision by using optical interference. As a typical example of such interference measuring method, a fringe scanning type shearing interference method (is reported in RICOH technical report No.10, (1983) P.4 - P.9), which is a combination of the shearing interference method and the fringe scanning method.

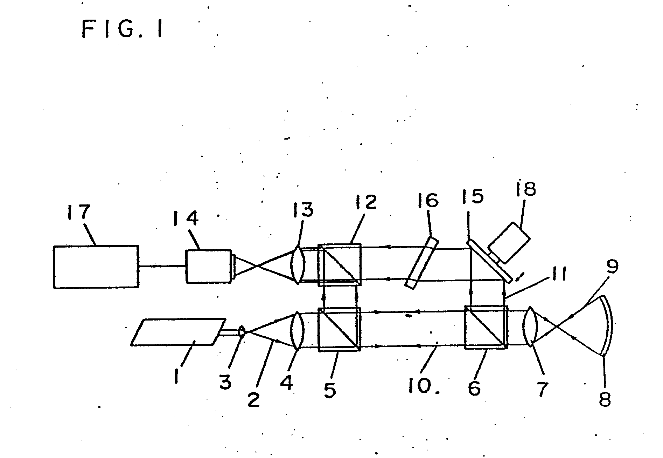

FIG.1 is a plan view showing the fundamental constitution of a shape measuring apparatus adopting such pattern scanning type shearing interference method. Operation is briefly elucidated based on FIG.1; a photo-beam 2 emitted from a light source 1 passes through beam splitters 5 and 6, after being expanded to a beam of sufficient diameter by a condensor 3 and a colimeter lens 4, and further, enters a measurement object 8 after being transformed into spherical wave by a penetration spherical lens 7. A reflected beam 9 having deviation information between the measurement object 8 and the spherical shape, is divided into a penetrating beam 10 and a reflecting beam 11 by the first beam splitter 6. The penetrating beam 10 is reflected by the second beam splitter 5, and further reflected by a third beam splitter 12, and entering a image sensing device 14 after stopping down the beam by a lens 13. On the other hand, the reflecting beam 11 is reflected by a mirror surface 15, laterally shifted by a parallel plate 16 which is disposed tilted in regard to the optical axis, and enters the image sensing device 14 passing through the third beam splitter 12. The above-mentioned two beams produce interference fringe on a image sensing surface of the image sensing device 14. Such interference

2

fringe appears in proportion to differential value of wave surface of the reflected beam 9, so that the deviation of the measurement object 8 from the wave surface can be obtained by integrating such value by a processing device 17.

In the above-mentioned shape measuring apparatus, the mirror surface 15 is moved very little by a piezo driving apparatus 18 to make a fringe scanning, so as to measure the interference fringe in high precision, and thereby the high precision interference fringe information can be obtained stably in regard to noise of the dispersion of quantity of light of interference fringe or the like.

In the above-mentioned shape measuring apparatus of the prior art, since the penetrating beam 10 and the reflecting beam 11 of the reflected beam 9 from the measurement object 8 passes through different optical paths, when the change of circumstances of the disturbance of air, the change of temperature or the like occurs, the influences occur in respective optical path and becomes cause of the measuring error. As a result, there was a problem on the control of measuring circumstances. Further, the above-mentioned shape measuring apparatus of the prior art is constituted by a large number of parts, so that there were problems on the scattering control of the components and on the

3

cost.

## DISCLOSURE OF INVENTION

Accordingly, the main purpose of the present invention is to provide a shape measuring apparatus capable of maintaining superior measuring precision in regard to the change of circumstances.

Another purpose of the present invention is to provide a shape measuring apparatus which enables to ease the scattering control of the components by simplifying the constitution and to reduce the cost.

The above-mentioned purposes of the present invention are achieved by the following constitution. Namely, the present invention is constituted, in a shape measuring apparatus having a light source for emitting light beam, a lens system for irradiating the light beam from the light source to a measurement object, beam splitter and mirror for generating two laterally shifted light beams from a reflected light beam from the measurement object, moving means for relatively moving the mirror and the beam splitter , an image sensing apparatus for transforming pattern of interference fringe made by the two laterally shifted light beams into electric signals, and electric signal processing means for computing the shape of the measurement object by processing the electric signal, to dispose the beam splitter and the mirror opposingly

4

and to generate two laterally shifted light beams by making the light beam which is input into the beam splitter reflect by each mirror surfaces of the beam splitter and the mirror.

Further, the shape measuring apparatus in accordance with the present invention contains a control means for controlling the moving means, the image sensing apparatus and the processing means of electric signal, besides the above-mentioned constitution.

## BRIEF DESCRIPTION OF DRAWINGS

FIG.1 is the plan view showing the foundamental constitution of the shape measuring apparatus of the prior art adopting the fringe scanning type shearing interference method, FIG.2 is a plan view showing foundamental constitution of a shape measuring apparatus of one embodiment in accordance with the present invention, FIG.3 is an illustration drawing of a method laterally shifting light beams, FIG.4 is a block diagram of an electric signal processing means of of the embodiment in accordance with the present invention, FIG.5 is an illustraion drawing of principle of the shearing interference method, FIG.6 is a flow chart of algorithm of shape measuring by using such method, FIG.7 is a plan view showing a concrete constitution of the embodiment, and FIG.8 is an

5

illustration drawing in case of measuring a convex surface.

## MOST PREFERABLE MODE TO EMBODY THE INVENTION

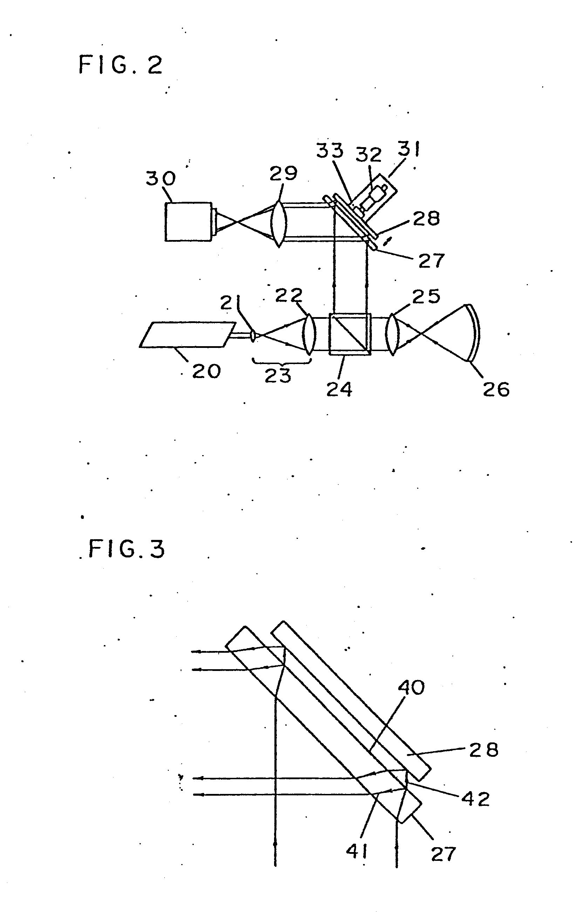

FIG.2 is a plan view showing a foundamental constitution of a shape measuring apparatus of one embodiment in accordance with the present invention. In the drawing, 20 is a light source consisting of a He-Ne laser, and the laser beam emitted from the light source 20 is expanded to a beam having a sufficient diameter by a beam expander 23 consisting of a condensor lens 21 and a collimator lens 22, passes through a first beam splitter 24; and spherical wave surface is formed by a penetrating spherical lens 25 and irradiates a measurement object. The beam reflected by the measuring object 26 passes through the penetrating spherical lens 25, is relfected by the first beam splitter 24, enters a second beam splitter 27 and a mirror 28 which are disposed almost in parallel, and is divided into two laterally shifted beams by being reflected on respective mirror surface of the second beam splitter 27 and the mirror 28. Further, such state is explained in detail with reference to FIG.3: the light beam entering the second beam splitter 27 is divided into reflection light beam 41 and a penetrating light beam 42 by a coating surface 40. The penetrating light beam 42 is reflected by a

6

mirror surface of a mirror 28 disposed to oppose the second beam splitter 27, and enters the second beam splitter 27 again, and is emitted being laterally shifted in regard to the reflecting light (sic) 41.

Back to FIG.2, the above-mentioned two light beams pass nearly equal optical paths, and enter an image sensing face of a image sensing apparatus 30 after the diameter of such beams is narrowed by a beam transformer lens 29.

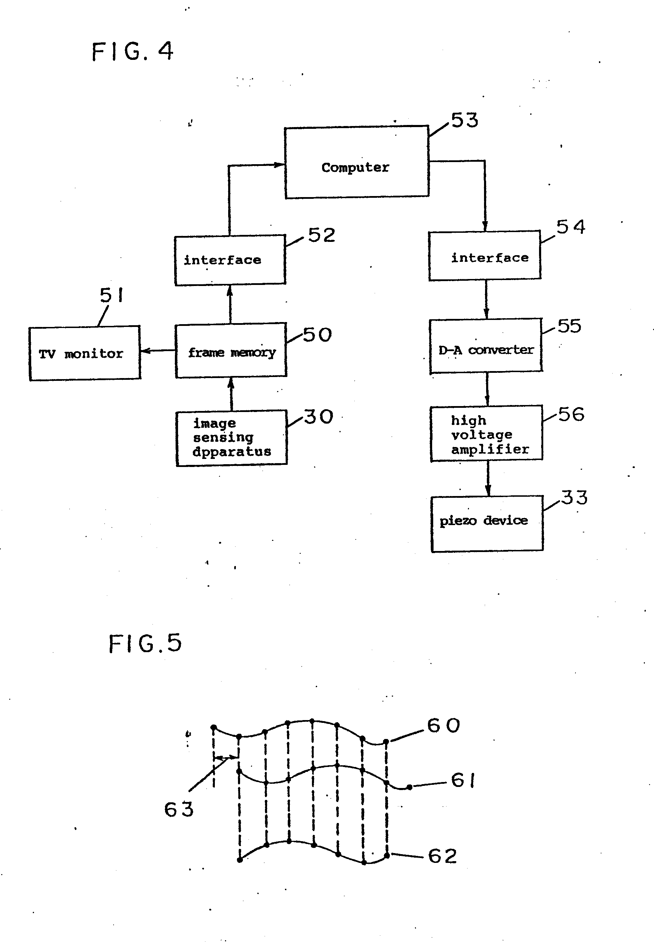

FIG.4 shows a constitution of processing means of electric signal of the present embodiment, and image of interference fringe transformed into electric signal by the image sensing apparatus 30 is input to a frame memory 50, transformed into digital signal and at the same time displayed on a TV monitor 51. Further, data of interference fringe are inputed to a computer 53 through an interface 52 which computes the shape of the measurement object in accordance with an algorithm programmed beforehand.

Back to FIG.2, the mirror 28 is disposed on an air-slide 31, and it is constituted so as to move in beeping the parallel state to the second beam splitter 27 by a micrometer 32 and a piezo driving device 33. The fringe scanning is made by changing the quantity of the lateral shifting of the above-mentioned two light beams by the micrometer 32 and fine moving of the

7

mirror 28 by the piezo driving device 33. In FIG.4, the scanning quantity of the intereference fringe follows the command from the computer 53, and is controled by driving the piezo driving device 33 through an interface 54, D - A transformer 55, and a high voltage amplifier 56.

Next, the principles of the shearing interference method and the fringe scanning method are elucidated basing on FIG.5. Now, the following explanation is made in one dimension for simplicity's sake.

The reflected light beam from the measurement object 26 has deviation information from the imaginative standard spherical wave face produced by the penetrating spherical lens 25. The optical path difference between such reflective wave surface 60 (defined as $W(x)$) and the wave surface 61 laterally shifted by the quantity of lateral shifting 63 is defined as 62. The interference fringe is generated corresponding to such optical path difference 62 (defined as $\Delta W(x)$), and in case that the quantity of laterally shifting 63 (defined as S) is very small, the equation (1) holds

$$\Delta W(x) = S \cdot \frac{d\dot{W}(x)}{dx} \qquad \ldots\ldots\ldots \quad (1)$$

8

and then, the reflective wave face W(x) can be obtained by integrating the interference fringe $\Delta W(x)$ by the computer 53.

Next, the fringe scanning method for being out for $\Delta W(x)$ in high precision is elucidated. By fine-moving of the mirror face 28 and changing the phase of the laterally shifted wave surface 61 by one wave length, the intensity of the interference fringe on the arbitrary point of the intereference fringe $\Delta W(x)$ changes by $2\pi$ in a sine curve manner. In such case, as the begining phase is $\Delta W(x)$, $\Delta W(x)$ can be obtained in high precision by sampling the change of intensity of the interference fringe and computing it by the computer 53. Namely, when the phase of the laterally shifted wave surface 61 is changed by N steps for every $\lambda/N$, and measuring the intensity of the intereference fringe Ij(x) on the arbitrary point X of the intereference fringe N times, $\Delta W(x)$ is obtained by following equation:

$$\Delta W(x) = \frac{\lambda}{4\pi} \tan^{-1} \frac{\sum_{j=1}^{N} Ij(x)\sin 2\pi\frac{j}{N}}{\sum_{j=1}^{N} Ij(x)\cos 2\pi\frac{j}{N}} \; ; \; mod(2\pi) \; \ldots\ldots (2).$$

Therein, $\lambda$ is the wave length of the light source. [refer to the RICOH technical report No.10 (1983) P.6 − P.7 supra]

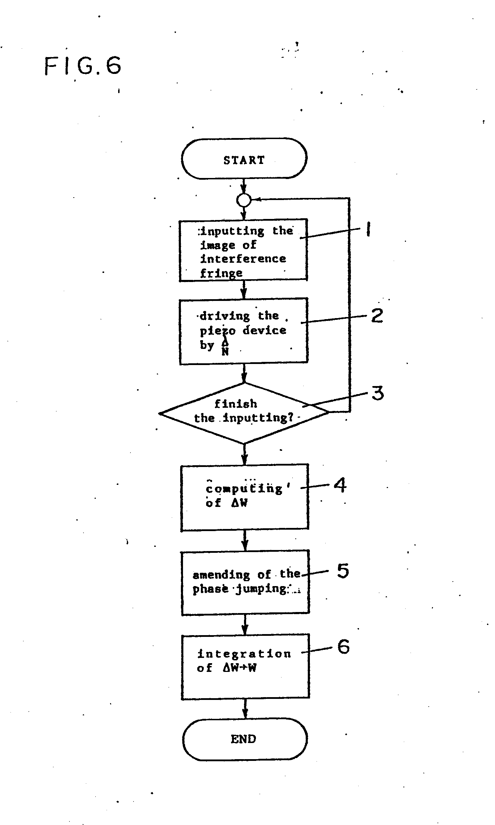

FIG.6 shows the algorithm of measuring the shape by using the apparatus of the embodiment.

As the measurement is started, first, after sampling the image of the interference fringe in the frame memory 50 at the predetermined measuring point number of, it is input into the computer 53 (step 1). Next, by moving the piezo device by $\lambda/N$, the image of the interference fringe is input similarly (step 2). By repeating such steps f the time of predetermined moving number (N-1) of the piezo device, and N number of images of the interference fringe are input (step 3). When the inputting is over, the biginning phase value $\Delta W(x)$ is computed in accordance with the equation (2) (step 4). Next, since $\Delta W(x)$ takes the value between $-\pi$ and $\pi$, and there is a phase jumping part of $2\pi$ between each measuring points, it is corrected (step 5). Furthermore, $W(x)$ is obtained by integrating the amended $\Delta W(x)$ (step 6).

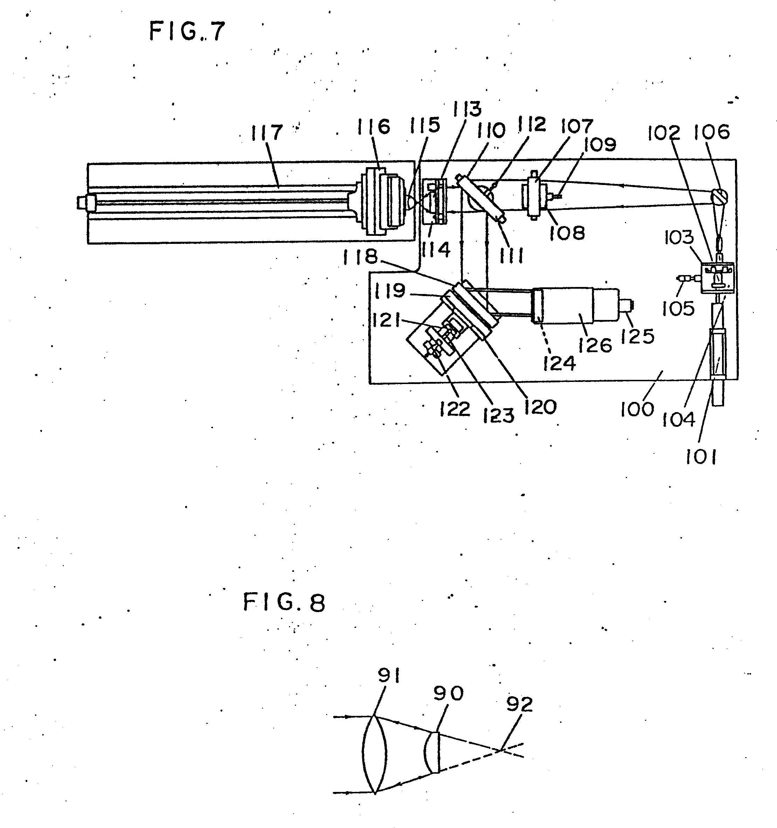

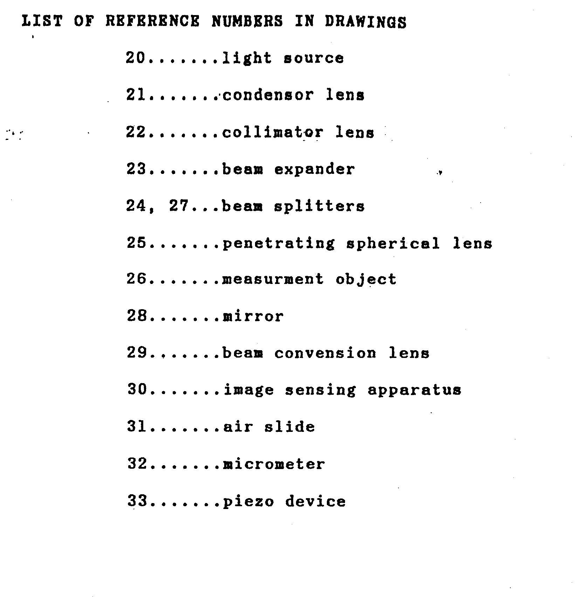

FIG.7 shows a concrete constitution of the embodiment. Every constituting parts are disposed on a surface plate 100, removed of the affect of vibration, and reduced the change of relative positioning relation between each parts. 101 is a He - Ne laser light source, and driven by exclusive high voltage electric source. 102 is a focusing lens, and using a objective lens of the microscope. And 103 is a pin-hole, which is disposed nearly the focal point of the focusing lens

10

102 and corrects the wave face using the measurement. The focusing lens 102 and the pin-hole are held by a holder 104, and the positioning relation between them can be adjusted by a micrometer 105. 106 is a reflecting mirror, which turns the optical path nearly 90 degree so as to curtail the space. 107 is a collimator lens, which is constituted by two single lenses. The collimator lens 107 is held by a holder 108, which can adjust the swing and tilt. 109 is a micrometer for adjusting the swing. A first beam splitter 110 is a flat type, and held by holder 111, and it can be adjust the swing and tilt. 112 is a micrometer for adjusting the swing. 113 is a penetrating spherical lens, and for its holder 114 a lock-in type one is used because of having a necessity of changing the penetrating spherical lens depending on the shape of measurement object 115, further it can adjust the swing and tilt. The holder 116 of the measurement object 115 has three hooks, so that it can hold the measurement objects having many different diameter. This holder 116 can adjust not only swing and tilt, but also positioning of up and down, and right and left. Further, the holder 116 is disposed on rails 117, movable along the optical axis, and the quantity of movement can be measured by a linar scale. 118 is a second beam splitter. 119 is a mirror held by

11

a holder 120, and can adjust the swing and tilt. Further, the holder 120 is fixed on an air slide 121, and can be moved nearly in parallel with the second beam splitter 118 by a micrometer 122 and a piezo device 123. 124 is a beam transformer lens, 125 is a image sensing apparatus, and both of them are held by a holder 126; and the image sensing apparatus 125 can move along the optical axis, so that the size of the interference fringe on the image sensing surface can be changed.

Though, the above-mentioned FIG.2 showed the case of measuring the shape of a concave surface, but in case of measuring the shape of convex surface, as shown in FIG.8, a measurement object 90 is disposed nearer to a penetrating spherical lens 91 than the focus position 92 of the penetrating spherical lens 91. Furthermore, in case of measuring the shape of plane surface, the penetrating spherical lens 25 in FIG.25 is taken out.

Further, FIG.2 shows a prism type as the first beam splitter 24, however, a flat plate type may be used as shown in FIG.7. And the beam transformer lens 29 is not necessary, in case the image sensing surface of the image sensing apparatus 30 has sufficient space for entering the interference fringe.

Further, though in this embodiment the fringe

12

scanning is made by moving the mirror 28, it is needless to say that the moving of the second beam splitter 27 may be made.

INDUSTRIAL APPLICABILITY

As mentioned above, in accordance with the present invention, since the laterally shifting of the wave surface is made by the beam splitter and mirror disposed opposing each other, and the fringe scanning is made by fine-moving of at least one of the mirror face or beam splitter, the constitution becomes simple, and the two laterally shifted beams pass nearly the same optical path, so that it is stable in regard to the change of circumstances, and can measure the shape in high precision.

13

0189482

CLAIMES

1.        A shape measuring apparatus having a light source for emitting light beam, a lens system for irradiating light beam from said light source to a measurement object, a beam splitter and a mirror for producing two laterally shifted light beams from a reflected light beam from said measurement object, moving means for relatively moving said beam splitter and said mirror, an image sensing apparatus for transforming pattern of interference fringe made by said two laterally shifted light beams into electric signals, and electric signal processing means for computing shape of said measurement object by processing of said electric signals, wherein said beam splitter and said mirror are disposed to oppose each other, and to generate two laterally shifted light beams by reflecting light beam input to said beam splitter by each mirror surface of said beam splitter and said mirror.

2.        A shape measuring apparatus in accordance with claim 1, wherein a piezo device is mounted on said mirror, to relatively drive said mirror and said beam splitter by driving said piezo device.

3.        A shape measuing apparatus in accordance with claim 1 or claim 2, wherein said mirror is disposed on an air-slide.

14

4.      A shape measuring apparatus in accordance with claim 1 or claim 2, wherein adjusting means for adjusting swing and tilt of said mirror is provided on a holder for holding said mirror.

5.      A shape measuring apparatus in accordance with claim 1, wherein a flat type beam splitter is used.

6.      A shape measuring apparatus having a light source for emitting light beam, a lens system for irradiating light beam from said light source to a measurement object, a beam splitter and a mirror for producing two laterally shifted light beam from a reflected light beam from said measurement object, moving means for relatively moving said beam splitter and said mirror, an image sensing apparatus for transforming pattern of interference fringe made by said two laterally shifted light beams into electric signals, an electric signal processing means of computing shape of said measurement object by processing of said electric signals, and control means for controling actions of said moving means, said image sensing apparatus and said processing means of electric signal, wherein said beam splitter and said mirror are disposed to oppose each other, and to generate two laterally shifted light beams by reflecting light beam input to said beam splitter by each mirror surface of

15

said beam splitter and said mirror.

7.        A shape measuring apparatus in accordance
with claim 6, wherein a piezo device is mounted on said
mirror, to relatively drive said mirror and said beam
splitter by driving said piezo device..

8.        A shape measuring apparatus in accordance
with claim 6 or claim 7, wherein said mirror is
disposed on an air-slide.

9.        A shape measuring apparatus in accordance
with claim 6 or claim 7, wherein adjusting means for
adjusting swing and tilt of said mirror is provided on
a holder for holding said mirror.

10.        A shape measuring apparatus in accordance
with claim 7, wherein said piezo device is constituted
as being controled by commands from a computer included
in said control means.

11.        A shape measuring apparatus in accordance
with claim 6, wherein a flat type beam splitter is
used.

FIG. 1

FIG. 2

FIG.3

FIG. 4

FIG. 5

0189482

FIG.6

```
                    ╭─────────────╮
                    │    START    │
                    ╰──────┬──────╯
                           │
                           ○──────────────────┐
                           ↓                   │
                    ┌─────────────┐            │
                    │ inputting the│   ─── 1   │
                    │ image of     │           │
                    │ interference │           │
                    │ fringe       │           │
                    └──────┬───────┘           │
                           ↓                   │
                    ┌─────────────┐            │
                    │ driving the │   ─── 2    │
                    │ piezo device│            │
                    │ by Δ/N      │            │
                    └──────┬──────┘            │
                           ↓                   │
                        ╱─────╲                │
                      ╱ finish  ╲   ─── 3      │
                     ⟨ the inputting?⟩─────────┘
                      ╲         ╱
                        ╲─────╱
                           ↓
                    ┌─────────────┐
                    │ computing   │   ─── 4
                    │ of ΔW       │
                    └──────┬──────┘
                           ↓
                    ┌─────────────┐
                    │ amending of the│ ─── 5
                    │ phase jumping  │
                    └──────┬──────┘
                           ↓
                    ┌─────────────┐
                    │ integration │   ─── 6
                    │ of ΔW→W     │
                    └──────┬──────┘
                           ↓
                    ╭─────────────╮
                    │     END     │
                    ╰─────────────╯
```

0189482

FIG.7

FIG.8

0189482

**LIST OF REFERENCE NUMBERS IN DRAWINGS**

20.......light source

21.......condensor lens

22.......collimator lens

23.......beam expander

24, 27...beam splitters

25.......penetrating spherical lens

26.......measurment object

28.......mirror

29.......beam convension lens

30.......image sensing apparatus

31.......air slide

32.......micrometer

33.......piezo device

# INTERNATIONAL SEARCH REPORT

International Application No. PCT/JP85/00382 0189482

## I. CLASSIFICATION OF SUBJECT MATTER (if several classification symbols apply, indicate all) ³

According to International Patent Classification (IPC) or to both National Classification and IPC

Int. Cl⁴ G01B11/24, G01B11/30, G01B9/02

## II. FIELDS SEARCHED

### Minimum Documentation Searched ⁴

| Classification System | Classification Symbols |
|---|---|
| IPC | G01B11/24, G01B11/30, G01B9/02 |

### Documentation Searched other than Minimum Documentation to the Extent that such Documents are Included in the Fields Searched ⁶

| | |
|---|---|
| Jitsuyo Shinan Koho | 1970 – 1984 |
| Kokai Jitsuyo Shinan Koho | 1971 – 1984 |

## III. DOCUMENTS CONSIDERED TO BE RELEVANT ¹⁴

| Category* | Citation of Document, ¹⁶ with indication, where appropriate, of the relevant passages ¹⁷ | Relevant to Claim No. ¹⁸ |
|---|---|---|
| Y | JP, A, 48-51653 (Shizuoka Daigaku-cho, Ono Katsuji) 20 July 1973 (20. 07. 73) Page 2, upper left column, line 15 to page 3, upper right column, line 1 (Family : none) | 1 – 11 |
| Y | Ricoh technical report No. 10, December. 1978 Kato Toshio "Shimasosa Shearing Kanshoho niyoru Hikyumenjo no Sokutei"  P4-9 | 1 – 11 |
| Y | Tsujiuchi Junpei "Kogakuteki sokutei handbook" 25 July 1981 (25. 07. 81) Asakura Shoten P115-117, P230-231 | 3 – 5 7 – 10 |

* Special categories of cited documents: ¹⁵

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search ² | Date of Mailing of this International Search Report ² |
|---|---|
| July 27, 1985 (27. 07. 85) | August 12, 1985 (12. 08. 85) |

| International Searching Authority ¹ | Signature of Authorized Officer ²⁰ |
|---|---|
| Japanese Patent Office | |

Form PCT/ISA/210 (second sheet) (October 1981)